# EUROPÄISCHE PATENTSCHRIFT

(11) **EP 2 332 751 B1**
(45) Veröffentlichungstag und Bekanntmachung des Hinweises auf die Patenterteilung: **14.05.2014**
(21) Anmeldenummer: 10192959.4
(22) Anmeldetag: 29.11.2010
(51) Int. Cl.: B60D 1/14, B62D 21/02, B62D 25/20

(54) **Lkw-Rohrtraverse mit geteiltem Rohr**
Lorry pivot bar with separated bar
Traverse tubulaire pour camion dotée d'un tube divisé

(30) Priorität: 14.12.2009 DE 102009054623
(43) Veröffentlichungstag der Anmeldung: 15.06.2011
(73) Patentinhaber: Jost-Werke GmbH, 63263 Neu-Isenburg (DE)
(72) Erfinder: Szczepanek, Udo, 82223 Eichenau (DE)
(74) Vertreter: Trossin, Hans-Jürgen

(56) Entgegenhaltungen:
- EP-A1- 1 022 164
- EP-A1- 2 138 332
- DE-A1- 2 750 959
- DE-U1- 7 808 690
- FR-A5- 2 082 287

## Beschreibung

Die vorliegende Erfindung betrifft eine Lastwagen-Rohrtraverse gemäß dem Oberbegriff des Anspruchs 1, welche zur Anbringung an einen heckseitigen Endbereich eines Fahrzeugrahmens eines Lastkraftwagens geeignet ist. Die gattungsgemäße Lkw-Rohrtraverse umfasst wenigstens ein Tragrohr mit geschlossenem Tragrohrquerschnitt, welches sich längs einer Tragrohrachse erstreckt. Dabei ist die Lkw-Rohrtraverse derart ausgebildet, dass die Tragrohrachse - bei Betrachtung in einem an den Lkw-Fahrzeugrahmen montierten Zustand - im Wesentlichen in Fahrzeugquerrichtung verläuft.

Wenigstens ein Tragrohr mit geschlossenem Tragrohrquerschnitt ist als geteiltes Tragrohr aus einer Mehrzahl von Tragrohrschalenteilen gebildet, welche sich jeweils nur über einen Teil des Tragrohrumfangs erstrecken.

Um die Tragrohrschalenteile sicher zu einem Tragrohr fügen zu können, ist vorgesehen, dass das geteilte Tragrohr erste Fügebereiche aufweist, in welchen die Tragrohrschalenteile durch erste Fügemittel nach einem ersten Fügeverfahren miteinander verbunden sind.

Weiterhin wird die Lkw-Rohrtraverse eine Anhängerkupplungsaufnahme auf, welche zur Aufnahme einer Anhängerkupplung ausgebildet ist.

Eine derartige Traverse ist beispielsweise in Figur 1 der EP 1 932 690 A gezeigt und in den Absätzen [0002] bis einschließlich [0006] dieser Druckschrift beschrieben. Ebenso ist eine LKW-Rohrtraverse aus der EP 1 022 164 A1 bekannt, die den Oberbegriff des Anspruchs 1 zeigt.

Es ist Aufgabe der vorliegenden Erfindung, eine gattungsgemäße Lkw-Rohrtraverse anzugeben, welche mit sehr einfachen und somit kostengünstigen Mitteln eine belastungsgerechte Gestaltung ermöglicht.

Diese Aufgabe wird gemäß der vorliegenden Erfingung durch eine Lkw-Rohrtraverse der eingangs genannten Art gelöst, bei welcher wenigstens ein Teil der ersten Fügemittel zur Festlegung der Anhängerkupplungsaufnahme an dem wenigstens einen Tragrohr beitragen.

Durch die Verwendung von Tragrohrschalenteilen, welche sich jeweils nur über einen Teil des Umfangs des aus ihnen gebildeten Tragrohrs erstrecken, können beliebige Rohrquerschnittsformen sehr einfach und kostengünstig erzeugt werden. Beispielsweise können die Tragrohrschalenteile sehr einfach durch Tiefziehen auch in großer Stückzahl hergestellt werden.

Somit kann die einfache Rohr-Bauweise beibehalten, aber hinsichtlich des verwendeten Rohrquerschnitts erheblich flexibilisiert werden.

Zur Vereinfachung der Herstellung der bezeichneten Tragrohre mit geschlossenem Querschnitt kann vorgesehen sein, dass die Tragrohrschalenteile eines geteilten Tragrohrs eine im Wesentlichen gleiche Gestalt haben. Dann reicht die Herstellung einer einzigen Art von Tragrohrschalenteilen zur Bildung einer Tragrohrart aus.

Die Verwendung von Gleichteilen als Tragrohrschalenteile zur Bildung eines Tragrohrs kann weiter dadurch unterstützt werden, dass ein Tragrohrschalenteil, vorzugsweise die Gesamtheit aller Tragrohrschalenteile eines Tragrohrs, bezüglich einer zur Tragrohrachse orthogonalen Symmetrie-Längsmittelebene spiegelsymmetrisch ausgebildet ist.

Zusätzlich oder alternativ zu der gerade beschriebenen Spiegelsymmetrie kann daran gedacht sein, dass die Tragrohrschalenteile eines Tragrohrs derart ausgestaltet und zur Bildung des Tragrohrs angeordnet sind, dass sie sich durch Drehung um einen vorbestimmten Winkel um die Tragrohrachse ineinander überführen lassen.

Um die Anzahl an Tragrohrschalenteilen, welche zur Bildung eines Tragrohrs benötigt werden, möglichst gering zu halten, kann vorgesehen sein, dass ein Tragrohr im Wesentlichen aus zwei Tragrohrschalenteilen gebildet ist. Dann sind diese Tragrohrschalenteile vorzugsweise derart in der Lkw-Rohrtraverse angeordnet, dass das zweite Tragrohrschalenteil dem ersten entspricht, wenn es um 180° um die Tragrohrachse gedreht ist.

Vorzugsweise sind die ersten Fügemittel lösbare Fügemittel, beispielsweise Schraubverbindungen, zu welchen insbesondere Schrauben-Mutter-Verbindungen zählen sollen, um die zu einem Tragrohr gefügten Tragrohrschalenteile auch wieder, etwa zu Reparatur- oder/und Wartungszwecken, vereinzeln zu können oder um den ersten Fügemitteln noch weitere Funktionen zuordnen zu können, wie weiter unten ausgeführt ist.

Für eine besonders hohe Fügesicherheit der Tragrohrschalenteile und damit einer hohen Belastbarkeit des daraus gebildeten Tragrohrs kann vorgesehen sein, dass das geteilte Tragrohr zweite Fügebereiche aufweist, in welchen die Tragrohrschalenteile durch von den ersten verschiedene zweite Fügemittel nach einem vom ersten verschiedenen zweiten Fügeverfahren miteinander verbunden sind.

Die ersten und die zweiten Fügebereiche können insbesondere in Richtung der Tragrohrachse aufeinander folgend vorgesehen sein.

Dabei kann zur Erhöhung der Belastbarkeit des aus Tragrohrschalenteilen gebildeten Tragrohrs vorgesehen sein, dass die zweiten Mittel unlösbare Fügemittel sind. Dabei ist vorzugsweise an besonders belastbare Schweißverbindungen gedacht, jedoch soll auch nicht ausgeschlossen sein, dass etwa zur Erhöhung der inneren Dämpfung der aus Tragrohrschalenteilen gebildeten Tragrohre die Tragrohrschalenteile durch Nietverbindungen gefügt sind.

Konstruktiv kann ein Tragrohrschalenteil eines Tragrohrs zur bestmöglichen Funktionserfüllung einen Rohrschalenabschnitt mit um die Tragrohrachse herum gekrümmter Rohrwand aufweisen. Dieser Rohrschalenabschnitt sorgt im montierten Zustand im Verbund mit weiteren Tragrohrschalenteilen für die Bildung des geschlossenen Rohrquerschnitts. Um die Fügefähigkeit der Tragrohrschalenteile sicher zu stellen, kann vorgesehen sein, dass an dem Tragrohrschalenteil wenigstens ein Flansch absteht, an welchem wenigstens erste Fügebereiche, vorzugsweise auch zweite Fügebereiche vorgesehen sind.

Grundsätzlich kann jedoch auch daran gedacht sein, erste und zweite Fügebereiche an unterschiedlichen Flanschen auszubilden. Jedoch ist die Ausbildung an einem gemeinsamen Flansch mit weniger Herstellungsaufwand verbunden.

Um sowohl den Herstellungsaufwand der Tragrohrschalenteile als auch deren Montageaufwand zur Bildung eines Tragrohrs zu reduzieren, ist der wenigstens eine Flansch vorzugsweise im Wesentlichen eben.

Da die Lkw-Rohrtraverse in der Regel eine wesentlich größere axiale Länge als Durchmesserlänge aufweist, kann zur Sicherstellung einer ausreichenden Fügelänge von Tragrohrschalenteilen, insbesondere bei aus genau zwei Tragrohrschalenteilen gebildeten Tragrohren, daran gedacht sein, dass jedes von zwei Tragrohrschalenteilen eines Tragrohrs in Umfangsrichtung an den Rohrschalenabschnitt anschließend auf jeder Seite des Rohrschalenabschnitts je einen Flansch aufweist, an welchem erste Fügebereiche und vorzugsweise auch zweite Fügebereiche vorgesehen sind.

Dies bietet auch die vorteilhafte Möglichkeit der Ausübung von Fügekräften beiderseits der Tragrohrachse, was die Fügesicherheit eines aus zwei oder mehr Tragrohrschalenteilen gebildeten Tragsrohrs weiter erhöht.

Insbesondere sind zur vorteilhaften möglichst symmetrischen oder wenigstens gleichmäßigen Fügekrafteinleitung die ersten Fügemittel und vorzugsweise auch die zweiten Fügemittel im Wesentlichen symmetrisch zu einer die Tragrohrachse enthaltende Längssymmetrieebene an dem Tragrohr vorgesehen.

Dann, wenn ein Tragrohrschalenteil die oben genannten in Umfangsrichtung zu beiden Seiten des Rohrschalenabschnitts an diesen anschließenden Flansche aufweist, kann zur Erleichterung der Montage von zwei derartigen Tragrohrschalenteilen zu einem Tragrohr daran gedacht sein, dass wenigstens Kontaktflächen der beiden Flansche eines Tragrohrschalenteils, welche zur Anlage an Gegenkontaktflächen von Flanschen eines weiteren Tragrohrschalenteils ausgebildet sind, wenigstens in parallelen Ebenen, vorzugsweise im Wesentlichen in einer gemeinsamen Ebene liegen.

Zur möglichst symmetrischen Einleitung von Fügekräften ist die zuvor beschriebene, die Tragrohrachse enthaltende Längssymmetrieebene vorzugsweise orthogonal zu den parallelen Ebenen bzw. zu der gemeinsamen Ebene der Kontaktflächen der beiden Flansche orientiert.

Zur Befestigung des Tragrohrs an dem Lkw-Fahrzeugrahmen kann das Tragrohr an wenigstens einem Längsendbereich, vorzugsweise jedoch an beiden Längsendbereichen einen Endbereich-Befestigungsabschnitt aufweisen.

Je nach Gestaltung dieses Endbereich-Befestigungsabschnitts kann mit der erfindungsgemäßen Lkw-Rohrtraverse eine weitere vorteilhafte Wirkung erzielt werden, nämlich die in höchstem Maße einfache Längenanpassung der Lkw-Rohrtraverse an das Einbaumaß zwischen zwei Lkw-Fahrzeug-Längsrahmenträgern durch einfaches Ablängen, etwa Absägen der Tragrohrschalenteile oder des daraus gebildeten wenigstens einen Tragrohrs.

Somit kann ein und dieselbe Lkw-Rohrtraverse in ihrer Einbaulänge an das jeweils tatsächliche toleranzbedingte Einbaumaß des konkret zu bildenden Fahrzeugs zwischen zwei im Wesentlichen parallelen, in Fahrzeuglängsrichtung verlaufenden Lkw-Fahrzeug-Längsrahmenträgern angepasst werden, und zwar auch über unterschiedliche Lkw-Bauarten hinweg. Hierzu reicht es aus, die erfindungsgemäße Lkw-Rohrtraverse mit einem gewissem Übermaß bezüglich des gewünschten Einbaumaßes und der damit verbundenen Einbaumaßtoleranz auszuliefern und vor Ort während des jeweiligen Einbaus auf das jeweils am konkreten Fahrzeug benötigte Einbaumaß abzulängen.

Dabei sollte vorteilhafterweise darauf geachtet werden, dass die oben genannten Fügebereiche durch die Ablängung nicht oder kaum beeinträchtigt werden, d. h. dass insbesondere an den Längsenden selbst im Wesentlichen keine Fügebereiche vorgesehen sind.

Zur Verringerung der zur Montage der erfindungsgemäßen Lkw-Rohrtraverse an den Lkw-Fahrzeugrahmen benötigten Anzahl an Bauteilen kann vorgesehen sein, dass wenigstens ein Teil der ersten Fügemittel zur Befestigung des Endbereich-Befestigungsabschnitts an den LKW-Fahrzeugrahmen beitragen. Somit können die ersten Fügemittel nicht nur zum Fügen von Tragrohrschalenteilen zu einem Tragrohr, sondern gleichzeitig zur Anbringung des so gebildeten Tragrohrs an den Lkw-Fahrzeugrahmen herangezogen werden.

Besonders bevorzugt weist die Lkw-Rohrtraverse einen Zugstangenlagerbock als Anhängerkupplungsaufnahme auf. Jedoch sollen auch andere Formen von Anhängerkupplungsaufnahmen nicht ausgeschlossen sein. Vorzugsweise weist die Lkw-Rohrtraverse eine vollständig montierte Anhängerkupplung auf. Diese umfasst jedoch in der Regel eine Anhängerkupplungsaufnahme.

>

Für die beschriebene Doppelfunktion der ersten Fügemittel nicht nur zum Fügen von Tragrohrschalenteilen zu einem Tragrohr, sondern darüber hinaus auch zur Befestigung des Tragrohrs am Lkw-Fahrzeugrahmen oder/und zur Festlegung der Anhängerkupplungsaufnahme, ist es vorteilhaft, wenn die ersten Fügemittel eine Fügekraft orthogonal zur Tragrohrachse bewirken.

Zur Befestigung der Lkw-Rohrtraverse an dem Lkw-Fahrzeugrahmen kann die Traverse darüber hinaus längsendseitige Befestigungszwischenstücke aufweisen, welche einenends mit dem Tragrohr und anderenends mit dem Lkw-Fahrzeugrahmen verbunden sind. Derartige Befestigungszwischenstücke können wenigstens abschnittsweise eine L-förmige Gestalt aufweisen, wobei ein Schenkel zur Verbindung mit einem Längsende eines Tragrohrs ausgebildet ist und der andere Schenkel zur Verbindung mit einem Lkw-Fahrzeuglängsrahmenträger ausgebildet ist. Dann kann das Tragrohr und damit die Lkw-Rohrtraverse vermittels der Befestigungszwischenstücke auch an am Lkw vertikalen Wandabschnitten der Lkw-Fahrzeuglängsrahmenträger einfach und sicher befestigt werden.

Zur Erhöhung der Belastbarkeit der erfindungsgemäßen Lkw-Rohrtraverse kann vorgesehen sein, dass diese eine Mehrzahl von geteilten Tragrohren mit geschlossenem Tragrohrquerschnitt aufweist.

Die vorliegende Erfindung wird nachfolgend anhand der beiliegenden Zeichnungen näher erläutert werden. Es stellt dar:
Figur 1: eine Draufsicht auf eine Ausführungsform einer erfindungsgemäßen Lkw-Rohrtraverse mit daran angebauter Anhängerkupplung,
Figur 2: ein Schalenteil zur Bildung eines Tragrohrs der Lkw-Rohrtraverse von Figur 1,
Figur 3: eine Querschnittsansicht der Befestigung eines Tragrohrs der Lkw-Rohrtraverse von Figur 1 an einem Lkw-Fahrzeuglängsrahmenträger,
Figur 4: eine Draufsicht eines bei der Befestigung von Figur 3 verwendeten Befestigungszwischenstücks,
Figur 5: eine Vorderansicht der Befestigung der Lkw-Rohrtraverse von Figur 1 an einem Lkw-Fahrzeuglängsrahmenträger und
Figur 6: eine Querschnittsansicht eines Tragrohrs der Lkw-Rohrtraverse von Figur 1 durch zweite F-ügebereiche der beteiligten Tragrohrschalenteile.

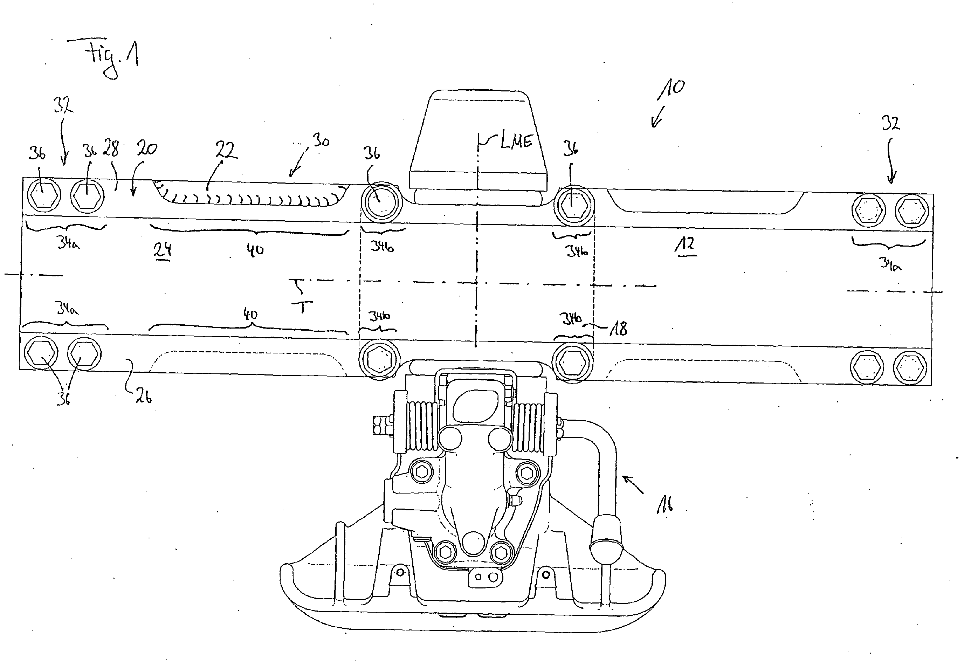

In Figur 1 ist eine erfindungsgemäße Lastkraftwagen-Rohrtraverse allgemein mit 10 bezeichnet.

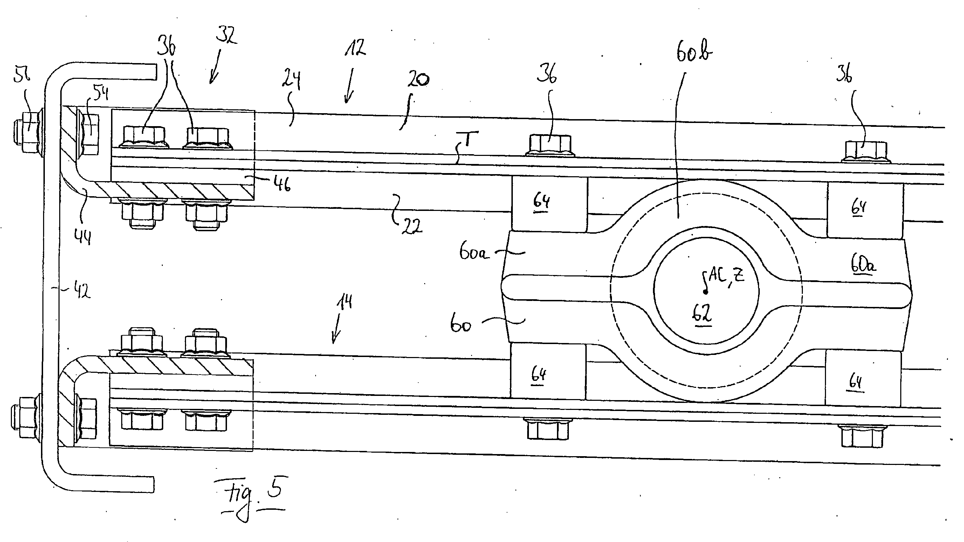

Die Lkw-Rohrtraverse umfasst ein oberes Tragrohr 12 und ein darunter liegendes unteres Tragrohr 14 (siehe Figur 5).

An der Rohrtraverse ist zwischen dem oberen Tragrohr 12 und dem unteren Tragrohr 14, das im übrigen identisch zum oberen Tragrohr 12 aufgebaut ist, eine gefederte Anhängerkupplung 16 angeordnet. Genauer ist ein Zugstangenlagerbock 18, welcher die restlichen Bauteile der Anhängerkupplung 16 trägt, zwischen den Tragrohren 12 und 14 festgelegt.

Da das untere Tragrohr 14, wie bereits gesagt, identisch zum oberen Tragrohr 12 ausgebildet ist, wird stellvertretend für die beiden Tragrohre 12 und 14 der Lkw-Rohrtraverse 10 lediglich das obere Tragrohr 12 näher beschrieben werden.

Das obere Tragrohr 12 verläuft längs einer Tragrohrachse T, welche in einem an den Lkw-Fahrzeugrahmen montierten Zustand der Lkw-Rohrtraverse 10 in Fahrzeugquerrichtung verläuft.

Wie in den Figuren 1, 3 und 6 zu erkennen ist, ist das Tragrohr 12 mit geschlossenem ovalem Rohrquerschnitt aus zwei Tragrohrschalenteilen 20 und 22 gebildet.

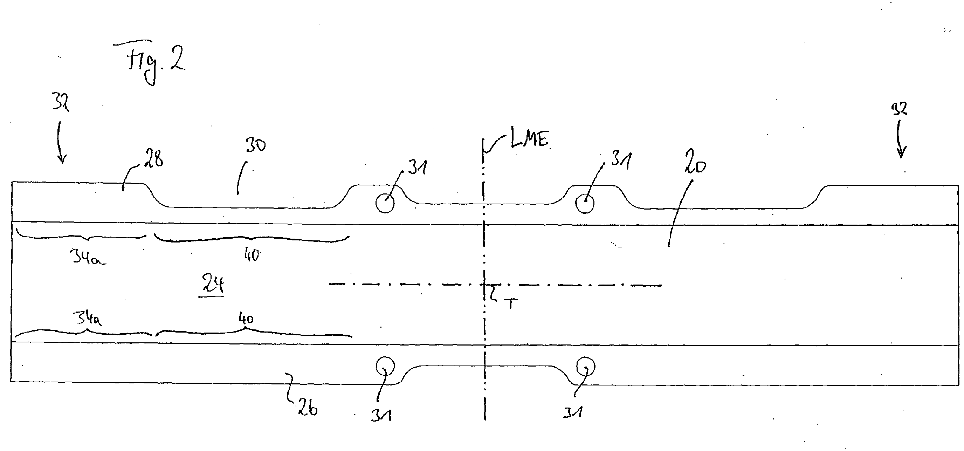

Die beiden Tragrohrschalenteile 20 und 22 sind identisch, so dass es im nachfolgenden ausreicht, lediglich das insbesondere in Figur 2 alleine dargestellte Tragrohrschalenteil 20 stellvertretend für die zur Bildung der Tragrohre 10 und 14 der Lkw-Rohrtraverse 10 verwendeten Tragrohrschalenteile zu beschreiben.

Die Tragrohrschalenteile 20 und 22 sind vorzugsweise bezüglich einer zur Tragrohrachse T orthogonalen Längsmittelebene LME spiegelsymmetrisch.

Darüber hinaus vermag man aus den Figuren 1, 3 und 6 zu erkennen, dass dann, wenn die Tragrohrschalenteile 20 und 22 zu dem Tragrohr 12 zusammengebaut sind, die Anordnung und Ausbildung der Tragrohrschalenteile 20 und 22 vorzugsweise dergestalt ist, dass sich das eine Tragrohrschalenteil 20 oder 22 durch Drehung um 180° um die Tragrohrachse T in das jeweils andere Tragrohrschalenteil 22 oder 20 überführen lässt.

Aufgrund der bevorzugten Spiegelsymmetrie bezüglich der Symmetrieebene LME wird nachfolgend lediglich eine Hälfte des Tragrohrschalenteils 20 stellvertretend für das ganze Tragrohrschalenteil 20 beschrieben werden.

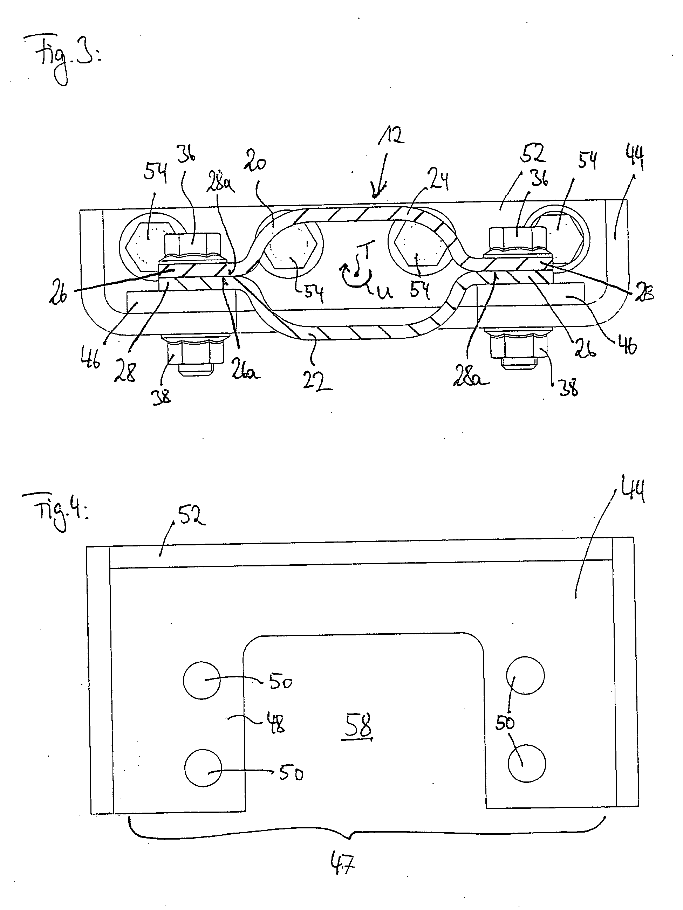

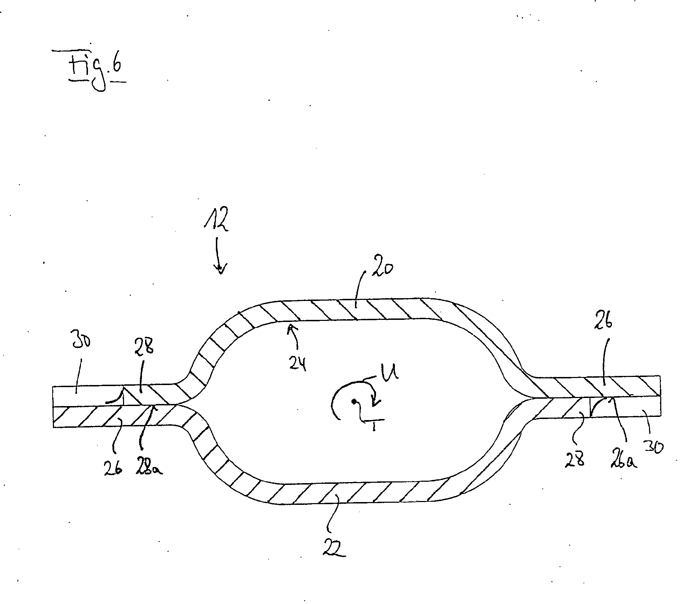

Das Tragrohrschalenteil 20 weist vorzugsweise in einem dessen Quermitte enthaltenen Abschnitt einen Rohrschalenabschnitt 24 auf, an dessen Querenden in Umfangsrichtung U um die Tragrohrachse T (siehe Figuren 3 und 6) jeweils ein Flansch 26 und ein Flansch 28 abstehen. Die Flansche 26 und 28 sind im Wesentlichen eben und weisen Kontaktflächen 26a und 28a auf, welche vorzugsweise in einer im Wesentlichen gemeinsamen Ebene gelegen sind.

Im montierten Zustand des Tragrohrs 12 kommt ein Flansch 26 des oberen Tragrohrschalenteils 20 auf einem Flansch 28 des unteren Tragrohrschalenteils 22 zur Anlage. Ebenso kommt ein Flansch 28 des oberen Tragrohrschalenteils 20 an den Flansch 26 des unteren Tragrohrschalenteils 22 zur Anlage.

Somit ist die Kontaktfläche 26a des Flansches 26 des oberen Tragrohrschalenteils 20 die Gegenkontaktfläche zur Kontaktfläche 28a des Flansches 28 des unteren Tragrohrteils 22 und umgekehrt.

Der Flansch 28 weist in seiner Längserstreckung Ausnehmungen 30 auf, so dass der Flansch 28 in den ausgenommenen Bereichen, bezogen auf die Tragrohrachse T, eine geringere radiale Ausdehnung aufweist als in den übrigen Bereichen.

In den Längsendbereichen 32 des Tragrohrs 12 bzw. des Tragrohrschalenteils 20 sind erste Fügebereiche 34a ausgebildet, in welchen die beiden Tragrohrschalenteile 20 und 22 durch erste, vorzugsweise lösbare Fügemittel, insbesondere Schrauben 36 und Muttern 38, verbunden sind. Darüber hinaus weisen die Flansche 26 und 28 in einem mittleren Bereich weitere erste Fügebereiche 34b auf, in welchen die beiden Tragrohrschalenteile 20 und 22 wiederum durch erste, vorzugsweise lösbare Fügemittel, insbesondere Schrauben 36 und Muttern 38, zu dem Tragrohr 12 gefügt sind.

In dem zwischen den ersten Teilfügebereichen 34a und 34b gelegenen Längsabschnitten des Tragrohrs 12 bzw. des Tragrohrschalenteils 20 definieren die Ausnehmungen 30 des Flansches 28 zweite Fügebereiche 40, in welchen das obere und das untere Tragrohrschalenteil 20 bzw. 22 miteinander durch ein vom ersten Fügemittel verschiedenes zweites Fügemitteil vorzugsweise unlösbar miteinander gefügt sind. Besonders bevorzugt sind längs des Randes der Ausnehmung 30 die Tragrohrschalenteile 20 und 22 abschnittsweise miteinander verschweißt.

In den Figuren 3 und 5 ist die Befestigung der Tragrohre 12 (und 14) an einem Lkw-Fahrzeuglängsrahmenträger 42 dargestellt.

Der Lkw-Fahrzeuglängsrahmenträger verläuft in Figur 5 orthogonal zu der Zeichenebene der Figur 5.

Die ersten Fügemittel in Form von Schrauben 36 und Muttern 38 im ersten Teilfügebereich 34a fügen nicht nur die beiden Tragrohrschalenteile 20 und 22 miteinander, sondern tragen überdies zur Befestigung der Tragrohre 12 und 14 am Lkw-Fahrzeuglängsrahmenträger 42 bei.

Hierzu durchsetzen in dem Längsabschnitt des ersten Teilfügebereichs 34a die Schrauben 36 ein Befestigungszwischenstück 44, welches somit unter Zwischenanordnung eines vorzugsweise metallischen Verbindungsteils 46 an das aus den Tragrohrschalenteilen 20 und 22 gebildete Tragrohr 12 angeschraubt ist.

In den Figuren 3 und 5 ist die Befestigung der Tragrohre 12 (und 14) an einem Lkw-Fahrzeuglängsrahmenträger 42 dargestellt.

Der Lkw-Fahrzeuglängsrahmenträger verläuft in Figur 5 orthogonal zu der Zeichenebene der Figur 5.

Die Schraubenschäfte der Schrauben 36 und damit die von den Schrauben 36 und den Muttern 38 als den ersten Fügemitteln bewirkte Fügekraft verläuft orthogonal zur Tragrohrachse T und insbesondere orthogonal zu der Erstreckungsebene der Flansche 26 und 28 der Tragrohrschalenteile 20 und 22.

Das Befestigungszwischenstück 44, welches in Figur 4 dargestellt ist, weist einen Mittelabschnitt 47 auf, welcher zur Befestigung an ein Tragrohr ausgebildet ist, der einen L-förmigen Querschnitt aufweist (siehe Figur 5). Der lange L-Schenkel 48 weist dabei die Durchgangslöcher 50 auf, welche im montierten Zustand von den Schäften der Schrauben 36 durchsetzt sind.

Der andere, in diesem Falle kürzere, L-Schenkel 52 ist dagegen in dem dargestellten Beispiel 4 mit Schrauben 54 und Muttern 56 an dem Lkw-Fahrzeuglängsrahmenträger 42 befestigt.

Das Befestigungszwischenstück 44 weist in seinem mittleren Abschnitt 47 eine Ausnehmung 58 auf, in welchem im montierten Zustand ein um die Tragrohrachse T gekrümmter Rohrschalenabschnitt 24 eines Tragrohrschalenteils aufgenommen sein kann (siehe Figur 5).

In Figur 5 ist überdies dargestellt, wie eine Anhängerkupplungsaufnahme, beispielsweise in Form eines Zugstangenlagerbocks 60, an der Rohrtraverse 10 aufgenommen sein kann.

Der Zugstangenlagerbock 60 kann als Gussteil ausgebildet und zwischen den Tragrohren 12 und 14 der Rohrtraverse 10 angeordnet sein. Eine Durchgangsöffnung 62 des Zugstangenlagerbocks 60, dessen Längsachse AC in Richtung der Kupplungs-Zugrichtung Z verläuft, d. h. in Richtung einer im Zugbetrieb auf die Zugstange wirkenden Zugkraft, durchsetzt den Zugstangenlagerbock 60.

Zwischen Befestigungsflanschen 60a, welche in Richtung der Tragrohrachse T zu beiden gegenüberliegenden Seiten der Durchgangsbohrung 62 von einem die Durchgangsbohrung 62 aufweisenden Lagerbockkörper 60b abstehen, und den Tragrohren 12 und 14 sind jeweils Abstandsteile 64 angeordnet, welche von Schrauben 36 durchsetzt sind.

Die Schrauben 36, welche die in Figur 2 dargestellten Durchgangsbohrungen 31 der Tragrohrschalenteile 20 und 22 durchsetzen und somit den Zugstangenlagerbock 60 formschlüssig an den Tragrohren 12 und 14 festlegen, können entweder bevorzugt als lange Schrauben die Baugruppe aus Tragrohren 12 und 14 sowie die dazwischenliegenden Abstandsteile 64 und Befestigungsflansch 60a durchsetzen und auf der Austrittsseite durch eine Mutter gekontert sein, oder die Schrauben 36 können in ein im Befestigungsflansch 60a eingebrachtes Gewinde von beiden Tragrohren her eingeschraubt sein.

Wie aus Figur 2 zu erkennen ist, sind an den Längsendbereichen 32 eines Tragrohrschalenteils vorzugsweise zunächst keine Durchgangsbohrungen oder sonstige Durchgangsöffnungen für die im dargestellten Beispiel die ersten Fügemittel bildenen Schrauben 36 vorgesehen.

Dies hat den Vorteil, dass die axiale Länge der Tragrohrschalenteile 20 und 22 zunächst auf das passende Einbaumaß am Lkw abgelängt werden können, und zwar vorzugsweise von beiden Längsendbereichen 32 her, so dass die Längsmittelebene LME des Tragrohrschalenteils 20 und somit des Tragrohrs 12 im Wesentlichen an Ort und Stelle verbleibt, während die Durchgangslöcher in den Längsendbereichen 32 zur Aufnahme der ersten Fügemittel (Schrauben 36) erst dann angefertigt zu werden brauchen, wenn die endgültige Länge der Tragrohrschalenteile 20, 22 der Tragrohre 12 und 14 feststeht.

Vorzugsweise kann die erfindungsgemäße Lkw-Rohrtraverse fertig montiert mit vollständiger Anhängerkupplung ausgeliefert und erst unmittelbar vor dem Anbau an den Lkw abgelängt und endmontiert werden.

Hierzu ist vorzugsweise der Zugstangenlagerbock 18 mit Schrauben 36 in einem die Längsmitte des Tragrohrs 12 enthaltenden Bereich an das Tragrohr 12 angeschraubt. Hierzu kann der Zugstangenlagerbock 18 mit entsprechenden Gewinden versehen sein oder die Schrauben 36 weisen einen ausreichend langen Schaft auf, um die Tragrohre 12 und 14 zu durchsetzen, so dass Muttern 38 auf die Schraubenschäfte aufdrehbar sind.

Der für Herstellung und Montage einer hochbelastbaren Lkw-Traverse notwendige Aufwand ist mit der vorliegend beschriebenen Lkw-Rohrtraverse gegenüber dem Stand der Technik erheblich minimiert.

## Patentansprüche

1. Lastkraftwagen-Rohrtraverse (10) zur Anbringung an einen heckseitigen Endbereich eines LKW-Fahrzeugrahmens (42), mit wenigstens einem Tragrohr (12, 14) mit geschlossenem Tragrohrquerschnitt, welches sich längs einer Tragrohrachse (T) erstreckt, wobei die LKW-Rohrtraverse (10) derart ausgebildet ist, dass die Tragrohrachse (T) in einem an den LKW-Fahrzeugrahmen (42) montierten Zustand im Wesentlichen in Fahrzeugquerrichtung verläuft, wobei wenigstens ein Tragrohr (12, 14) mit geschlossenem Tragrohrquerschnitt als geteiltes Tragrohr (12, 14) aus einer Mehrzahl von Tragrohrschalenteilen (20, 22) gebildet ist, welche sich jeweils nur über einen Teil des Tragrohrumfangs erstrecken, wobei das geteilte Tragrohr (12, 14) erste Fügebereiche (34a, 34b) aufweist, in welchen die Tragrohrschalenteile (20, 22) durch erste Fügemittel (36, 38) nach einem ersten Fügeverfahren miteinander verbunden sind, und wobei die LKW-Rohrtraverse eine Anhängerkupplungsaufnahme (18) aufweist, insbesondere in Form eines Zugstangen-Lagerbocks (18),
**dadurch gekennzeichnet, dass** wenigstens ein Teil der ersten Fügemittel (36) zur Festlegung der Anhängerkupplungsaufnahme (18) an dem wenigstens einen Tragrohr (12, 14) beitragen.

2. LKW-Rohrtraverse nach Anspruch 1,
**dadurch gekennzeichnet, dass** die Tragrohrschalenteile (20, 22) eines geteilten Tragrohrs (12, 14) eine im Wesentlichen gleiche Gestalt haben.

3. LKW-Rohrtraverse nach Anspruch 1 oder 2,
**dadurch gekennzeichnet, dass** ein Tragrohrschalenteil (20, 22), vorzugsweise die Gesamtheit aller Tragrohrschalenteile (20, 22) eines Tragrohrs (12, 14), bezüglich einer zur Tragrohrachse (T) orthogonalen Symmetrie-Längsmittelebene (LME) spiegelsymmetrisch ausgebildet ist.

4. LKW-Rohrtraverse nach Anspruch 1,
**dadurch gekennzeichnet, dass** die ersten Fügemittel (36, 38) lösbare Fügemittel (36, 38) sind, wie beispielsweise Schraubverbindungen, insbesondere Schrauben-Mutter-Verbindungen.

5. LKW-Rohrtraverse nach einem der vorhergehenden Ansprüche,
**dadurch gekennzeichnet, dass** das geteilte Tragrohr (12, 14) zweite Fügebereiche (40) aufinreist, in welchen die Tragrohrschalenteile (20, 22) durch von den ersten (36, 38) verschiedene zweite Fügemittel nach einem vom ersten verschiedenen zweiten Fügeverfahren miteinander verbunden sind.

6. LKW-Rohrtraverse nach Anspruch 5,
**dadurch gekennzeichnet, dass** die zweiten Fügemittel unlösbare Fügemittel sind, wie beispielsweise Schweißverbindungen.

7. LKW-Rohrtraverse nach Anspruch 1 oder nach einem der Ansprüche 4 bis 6,
**dadurch gekennzeichnet, dass** ein Tragrohrschalenteil (20, 22) eines Tragrohrs (12, 14) einen Rohrschalenabschnitt (24) mit um die Tragrohrachse (T) herum gekrümmter Rohrwand aufweist, von welcher wenigsten ein, vorzugsweise im Wesentlichen ebener, Flansch (26, 28) absteht, an welchem erste Fügebereiche (34a, 34b) und vorzugsweise auch zweite Fügebereiche (40) vorgesehen sind.

8. LKW-Rohrtraverse nach Anspruch 7,
**dadurch gekennzeichnet, dass** jedes von zwei Tragrohrschalenteilen (20, 22) eines Tragrohrs (12, 14) in Umfangsrichtung (U) an den Rohrschalenabschnitt (24) anschließend auf jeder Seite des Rohrschalenabschnitts (24) je einen Flansch (26, 28) aufweist, an welchem erste
Fügebereiche (34a, 34b) und vorzugsweise auch zweite Fügebereiche (40) vorgesehen sind.

9. LKW-Rohrtraverse nach Anspruch 8,
**dadurch gekennzeichnet, dass** wenigstens Kontaktflächen (26a, 28a) der beiden Flansche (26, 28) eines Tragrohrschalenteils (20, 22), welche zur Anlage an Gegenkontaktflächen (28a, 26a) von Flanschen (28, 26) eines weiteren Tragrohrschalenteils (20, 22) ausgebildet sind, wenigstens in parallelen Ebenen, vorzugsweise im Wesentlichen in einer gemeinsamen Ebene liegen.

10. LKW-Rohrtraverse nach einem der vorhergehenden Ansprüche,
**dadurch gekennzeichnet, dass** das Tragrohr (12, 14) an wenigstens einem, vorzugsweise an beiden Längsendbereichen (32), einen Endbereich-Befestigungsabschnitt (bei 32 und 34a) zur Befestigung am LKW-Fahrzeugrahmen (42) aufweist.

11. LKW-Rohrtraverse nach Anspruch 10,
**dadurch gekennzeichnet, dass** wenigstens ein Teil der ersten Fügemittel (36, 38) zur Befestigung des Endbereich-Befestigungsabschnitts (bei 32 und 34a) an den LKW-Fahrzeugrahmen (42) beitragen.

12. LKW-Rohrtraverse nach einem der vorhergehenden Ansprüche,
**dadurch gekennzeichnet, dass** die ersten Fügemittel (36, 38) eine Fügekraft orthogonal zur Tragrohrachse (T) bewirken.

13. LKW-Rohrtraverse nach einem der vorhergehenden Ansprüche , **dadurch gekennzeichnet, dass** sie eine Mehrzahl von geteilten Tragrohren (12, 14) mit geschlossenem Tragrohrquerschnitt aufweist.

## Claims

1. Lorry tubular cross beam (10) for installation at a rear end region of a lorry vehicle frame (42), comprising at least one stay tube (12, 14) having a closed stay tube cross section and extending along a stay tube axis (T), the lorry tubular cross beam (10) being constructed in such a way that the stay tube axis (T) extends substantially in the transverse direction of the vehicle in a state in which said cross beam is mounted on the lorry vehicle frame (42), at least one stay tube (12, 14) of closed stay tube cross section being formed as a divided stay tube (12, 14) made up of a plurality of stay tube shell parts (20, 22) which each extend over only part of the stay tube circumference, the divided stay tube (12, 14) having first joining regions (34a, 34b) in which the stay tube shell parts (20, 22) are interconnected by first joining means (36, 38) after a first joining process, and the lorry tubular cross beam having a trailer coupling socket (18), in particular in the form of a tie rod bracket (18), **characterised in that** at least one part of the first joining means (36) contributes to the fixing of the trailer coupling socket (18) to the at least one stay tube (12, 14).

2. Lorry tubular cross beam according to claim 1, **characterised in that** the stay tube shell parts (20, 22) of a divided stay tube (12, 14) have substantially the same shape.

3. Lorry tubular cross beam according to either claim 1 or claim 2, **characterised in that** a stay tube shell part (20, 22), preferably the entirety of all the stay tube shell parts (20, 22), of a stay tube (12, 14) are constructed so as to be mirror-symmetrical relative to a longitudinal central plane of symmetry (LME) that is orthogonal to the stay tube axis (T).

4. Lorry tubular cross beam according to claim 1, **characterised in that** the first joining means (36, 38) are releasable joining means (36, 38), such as screw connections, in particular screw-nut connections.

5. Lorry tubular cross beam according to any of the preceding claims, **characterised in that** the divided stay tube (12, 14) has second joining regions (40) in which the stay tube shell parts (20, 22) are interconnected by second joining means, which are different from the first (36, 38), after a second joining process, which is different from the first.

6. Lorry tubular cross beam according to claim 5, **characterised in that** the second joining means are unreleasable joining means, such as weld joints.

7. Lorry tubular cross beam either according to claim 1 or according to any of claims 4 to 6, **characterised in that** a stay tube shell part (20, 22) of a stay tube (12, 14) has a tube shell portion (24) comprising a tube wall that is curved about the stay tube axis (T), from which portion there protrudes at least one, preferably substantially planar, flange (26, 28) on which first joining regions (34a, 34b) and preferably also second joining regions (40) are provided.

8. Lorry tubular cross beam according to claim 7, **characterised in that** each of the two stay tube shell parts (20, 22) of a stay tube (12, 14) have, in the circumferential direction (U), one flange (26, 28) on each side of the tube shell portion (24) which joins the tube shell portion (24), on which flange first joining regions (34a, 34b) and preferably also second joining regions (40) are provided.

9. Lorry tubular cross beam according to claim 8, **characterised in that** at least contact surfaces (26a, 28a) of the two flanges (26, 28) of a stay tube shell part (20, 22), which contact surfaces are constructed to abut counter contact surfaces (28a, 26a) of flanges (28, 26) of another stay tube shell part (20, 22), are at least in parallel planes, preferably in substantially the same plane.

10. Lorry tubular cross beam according to any of the preceding claims, **characterised in that** the stay tube (12, 14) has an end-region attachment portion (at 32 and 34a) at at least one, preferably at both longitudinal end regions (32), for attachment to the lorry vehicle frame (42).

11. Lorry tubular cross beam according to claim 10, **characterised in that** at least one part of the first joining means (36, 38) contributes to the attachment of the end-region attachment portion (at 32 and 34a) to the lorry vehicle frame (42).

12. Lorry tubular cross beam according to any of the preceding claims, **characterised in that** the first joining means (36, 38) exert a joining force orthogonally to the stay tube axis (T).

13. Lorry tubular cross beam according to any of the preceding claims, **characterised in that** it has a plurality of divided stay tubes (12, 14) of closed stay tube cross section.

## Revendications

1. Traverse tubulaire pour camion (10) à monter sur une région d'extrémité arrière d'un châssis de camion (42), avec au moins un tube de support (12, 14) présentant une section transversale de tube de support fermée, qui s'étend le long d'un axe de tube de support (T), dans laquelle la traverse tubulaire pour camion (10) est configurée de telle manière que l'axe de tube de support (T) s'étende essentiellement dans la direction transversale du véhicule dans un état monté sur le châssis de camion (42), dans laquelle au moins un tube de support (12, 14) présentant une section transversale de tube de support fermée est réalisé sous la forme d'un tube de support divisé (12, 14) en une multiplicité de parties de coquille de tube de support (20, 22), qui ne s'étendent chacune que sur une partie du pourtour du tube de support, dans laquelle le tube de support divisé (12, 14) présente des premières zones de jonction (34a, 34b), dans lesquelles les parties de coquille de tube de support (20, 22) sont jointes les unes aux autres par des premiers moyens de jonction (36, 38) selon un premier procédé de jonction, et dans laquelle la traverse tubulaire pour camion présente un logement d'attelage de remorque (18), en particulier sous la forme d'un support de palier pour barre d'attelage (18), **caractérisée en ce qu'**au moins une partie des premiers moyens de jonction (36) contribuent à la fixation du logement d'attelage de remorque (18) audit au moins un tube de support (12, 14).

2. Traverse tubulaire pour camion selon la revendication 1, **caractérisée en ce que** les parties de coquille de tube de support (20, 22) d'un premier tube de support divisé (12, 14) présentent essentiellement la même configuration.

3. Traverse tubulaire pour camion selon la revendication 1 ou 2, **caractérisée en ce qu'**une partie de coquille de tube de support (20, 22), de préférence la totalité des parties de coquille de tube de support (20, 22) d'un tube de support (12, 14) est réalisée avec la symétrie de réflexion par rapport à un plan de symétrie central longitudinal (LME) orthogonal à l'axe de tube de support (T).

4. Traverse tubulaire pour camion selon la revendication 1, **caractérisée en ce que** les premiers moyens de jonction (36, 38) sont des moyens de jonction séparables (36, 38), comme par exemple des assemblages vissés, en particulier des assemblages par vis et écrou.

5. Traverse tubulaire pour camion selon l'une quelconque des revendications précédentes, **caractérisée en ce que** le tube de support divisé (12, 14) présente des deuxièmes zones de jonction (40), dans lesquelles les parties de coquille de tube de support (20, 22) sont jointes les unes aux autres par des deuxièmes moyens de jonction différents des premiers moyens de jonction (36, 38) selon un deuxième procédé de jonction différent du premier procédé de jonction.

6. Traverse tubulaire pour camion selon la revendication 5, **caractérisée en ce que** les deuxièmes moyens de jonction sont des moyens de jonction inséparables, comme par exemple des assemblages soudés.

7. Traverse tubulaire pour camion selon la revendication 1 ou selon l'une quelconque des revendications 4 à 6, **caractérisée en ce qu'**une partie de coquille de tube de support (20, 22) d'un tube de support (12, 14) présente une section de coquille tubulaire (24) avec une paroi tubulaire incurvée autour de l'axe de tube de support (T), de laquelle part au moins une aile (26, 28), de préférence essentiellement plane, sur laquelle il est prévu des premières zones de jonction (34a, 34b) et de préférence aussi des deuxièmes zones de jonction (40).

8. Traverse tubulaire pour camion selon la revendication 7, **caractérisée en ce que** chacune de deux parties de coquille de tube de support (20, 22) d'un tube de support (12, 14) présente chaque fois une aile (26, 28) sur chaque côté de la section de coquille tubulaire (24), qui se raccorde à la section de coquille tubulaire (24) dans la direction périphérique (U), sur laquelle il est prévu des premiers moyens de jonction (34a, 34b) et de préférence aussi des deuxièmes moyens de jonction (40).

9. Traverse tubulaire pour camion selon la revendication 8, **caractérisée en ce qu'**au moins des faces de contact (26a, 28a) des deux ailes (26, 28) d'une partie de coquille de tube de support (20, 22), qui sont conçues pour s'appliquer sur des faces de contact opposées (28a, 26a) d'ailes (28, 26) d'une autre partie de coquille de tube de support (20, 22), sont situées au moins dans des plans parallèles, de préférence essentiellement dans un plan commun.

10. Traverse tubulaire pour camion selon l'une quelconque des revendications précédentes, **caractérisée en ce que** le tube de support (12, 14) présente sur au moins une, de préférence sur les deux région(s) d'extrémité longitudinale(s) (32), une section de fixation de région d'extrémité (en 32 et 34a) pour la fixation au châssis de camion (42).

11. Traverse tubulaire pour camion selon la revendication 10, **caractérisée en ce qu'**au moins une partie des premiers moyens de jonction (36, 38) contribuent à la fixation de la section de fixation de région d'extrémité (en 32 et 34a) au châssis de camion (42).

12. Traverse tubulaire pour camion selon l'une quelconque des revendications précédentes, **caractérisée en ce que** les premiers moyens de jonction (36, 38) engendrent une force de jonction orthogonalement à l'axe de tube de support (T).

13. Traverse tubulaire pour camion selon l'une quelconque des revendications précédentes, **caractérisée en ce qu'**elle comporte une multiplicité de tubes de support divisés (12, 14) présentant une section transversale de tube de support fermée.
